# EUROPÄISCHE PATENTSCHRIFT

(11) **EP 0 670 250 B1**
(45) Veröffentlichungstag und Bekanntmachung des Hinweises auf die Patenterteilung: **12.05.1999**
(21) Anmeldenummer: 94119553.9
(22) Anmeldetag: 10.12.1994
(51) Int. Cl.: B60R 25/04

(54) **Kraftfahrzeug mit Diebstahlsicherung durch Motorstartblockierung**
Motor vehicle with anti-theft protection by means of engine starter inhibition
Véhicule automobile avec protection anti-vol par inhibition du démarreur du moteur

(30) Priorität: 23.02.1994 DE 4405708
(43) Veröffentlichungstag der Anmeldung: 06.09.1995
(73) Patentinhaber: DaimlerChrysler AG, 70567 Stuttgart (DE)
(72) Erfinder: Maas, Manfred, Dipl.-Ing., D-73730 Esslingen (DE); Martin, Fritz, Dipl.-Ing., D-73635 Ruderberg (DE)

(56) Entgegenhaltungen:
- EP-A- 0 141 011
- WO-A-91/14602
- DE-A- 2 503 266
- DE-A- 4 242 492
- REVUE TECHNIQUE AUTOMOBILE, Bd. 49, Nr. 568, Dezember 1994 BOULOGNE-BILLANCOURT, FR, Seiten 36-42, XP 000486548 PEROT 'Nouvelle petite Volkswagen: Polo en costume de Golf '

## Beschreibung

Die Erfindung bezieht sich auf ein Kraftfahrzeug mit Diebstahlsicherung durch Motorstartblockierung nach dem Oberbegriff des Patentanspruchs 1. Der Diebstahlschutz besteht bei einem derartigen Kraftfahrzeug darin, daß der Start des Motors nur möglich ist, wenn vom Benutzer ein zugangsberechtigendes Codesignal eingegeben wird, das die Erzeugung eines Startfreigabesignals bewirkt, welches von der Steuereinheit detektierbar ist, die nur nach Vorliegen des Startfreigabesignals den Betrieb des Motors erlaubt. Ohne Besitz des gültigen Zugangscodes kann daher das Fahrzeug nicht angelassen werden.

Eine derartige Diebstahlsicherungsmaßnahme ist beispielsweise in dem Firmenprospekt "Diebstahlschutz für das Auto" der Firma TEMIC TELEFUNKEN microelectronic GmbH, Druckdatum: August 1993, beschrieben. Ein in den Autoschlüssel integrierter Transponder übermittelt dort kontaktlos spezifische Daten an eine Auswerteelektronik, deren Empfängerspule im Zündschloß integriert ist.

Aus der deutschen Offenlegungsschrift 23 58 211 ist eine Sicherungsschaltung für Zündanlagen bekannt, bei der ein unberechtigtes Starten des Fahrzeugs durch eine Unterbrechung oder Störung des Zündvorgangs, insbesondere durch Unterbrechung des Zündspulenstromkreises, verhindert wird, wobei diese Blockierung durch eine elektronische Schaltung aufgehoben wird, die sich teilweise im Zündschlüssel und teilweise im Fahrzeug selbst befindet und durch Einstecken des Zündschlüssels ins Zündschloß dergestalt funktionsfähig wird, daß die vorherige Störung des Zündvorgangs aufgehoben wird.

In der Patentschrift US 4.209.709 ist eine Diebstahlsicherungseinrichtung durch Motorstartblockierung offenbart, bei der ein Diebstahlsicherungsschaltkreis eingangsseitig an die von einem Zünd-Start-Schalter abgehende Startleitung angeschlossen ist, und die bei Empfang eines durch Schließen des Zünd-Start-Schalters erzeugten Startanforderungssignals einen Motorstart aktiviert, wenn sie sich in einem motorstartfreigebenden Betriebszustand befindet. Der Diebstahlsicherungsschaltkreis ist mittels eines einzugebenden Codesignals zwischen dem motorstartfreigebenden und einem motorstartblockierenden Betriebszustand umschaltbar. Dabei ist für dieses System charakteristisch, daß das Codesignal über den Zünd-Start-Schalter selbst als definierte Folge von Ein- und Ausschaltzuständen eingegeben wird, wobei vorbestimmte Zeitabstände zwischen aufeinanderfolgenden Schalterzuständen einzuhalten sind. Der Diebstahlsicherungsschaltkreis besitzt einen speziell auf diese über den vorgelagerten Schalter realisierte Codeeingabe abgestimmten Schaltungsaufbau, insbesondere mit Logikgliedern, puffernden Kippgliedern und Zeitverzögerungseinrichtungen, um nur dann ein Startanforderungssignal zur Aktivierung eines Motorstarts durchzulassen, wenn zuvor genau die vorbestimmte Schalterzustandssequenz erkannt wurde.

Es ist für Diebstahlsicherungsanlagen in Kraftfahrzeugen des weiteren bekannt, eine zentrale Steuerelektronik des Kraftfahrzeuges, die insbesondere auch die Motorsteuerung durchführt, in einem Ruhezustand inaktiv zu halten und nur dadurch das Umschalten auf einen aktiven Betriebszustand zu ermöglichen, daß ein zu dieser Steuerelektronik passender Benutzercode über einen benutzerseitigen elektronischen Schlüssel eingegeben wird, siehe z.B. die Offenlegungsschrift DE 36 13 605 A1.

In der Offenlegungsschrift WO 91/14602 ist eine Steuereinrichtung zum Starten eines Verbrennungsmotors eines Kraftfahrzeuges beschrieben, die Schutzmaßnahmen gegen ein nicht autorisiertes Starten des Motors beinhaltet. Dazu ist eine Steuereinheit vorgesehen, die über eine zugehörige Codeeingabevorrichtung benutzercodespezifisch zur Erzeugung eines Motorstartfreigabesignals angesprochen werden kann. An den entsprechenden Startfreigabesignalausgang der Steuereinheit ist ein Leistungsregler angeschlossen, der über einen weiteren Eingang an eine Startleitung angeschlossen ist. Durch Schließen eines Zünd-Start-Schalters wird ein entsprechendes Startanforderungssignal über die Startleitung zum Leistungsregler übertragen, der daraufhin die Erregerspule eines Startermotors nur dann dergestalt erregt, daß ein Motorstart aktiviert wird, wenn er hierzu von der Steuereinheit durch Absenden des als Steuersignal für den Leistungsregler fungierenden Startfreigabesignals veranlaßt wird.

In der Offenlegungsschrift DE 25 03 266 A1 ist ein Kraftfahrzeug mit einer Zündanlage bekannt, die gegen ein Kurzschließen der Zündung geschützt ist. Dazu beinhaltet die Zündanlage zwei gekoppelte, gleichzeitig mittels eines gemeinsamen Schlüsselorgans betätigbare Kontaktvorrichtungen, von denen die eine als Zünd-Start-Schalter fungiert, indem sie schaltbar eine Batteriespannung über ein Tiefpaßfilter an eine Zündspule anlegt. Über die andere Kontaktvorrichtung wird gleichzeitig mit dem Betätigen der ersten Kontaktvorrichtung ein Signalorgan angesteuert, welches zur Abgabe eines fahrzeugspezifischen Codesignals eingerichtet ist. Das Ausgangssignal dieses Signalorgans wird zwischen dem Tiefpaßfilter und der Zündspule auf die betreffende Leitung gegeben. Eine Prüf- und Betätigungsvorrichtung vermag die von der ersten Kontaktvorrichtung und dem Tiefpaßfilter gelieferte Gleichspannungskomponente vom Ausgangssignal des Signalorgans zu unterscheiden, das zu diesem Zweck einen andersartigen Signalverlauf, z.B. in Form einer Impulsfolge, aufweisen muß. Die Prüf- und Betätigungsvorrichtung gibt die Zündung bei anliegender Gleichspannung nur frei, wenn sie das entsprechende fahrzeugspezifische Codesignal empfängt.

Der Erfindung liegt als technisches Problem die Bereitstellung eines Kraftfahrzeugs mit einem funktionell zuverlässigen und sicheren Schutz gegen ein unberechtigtes Starten des Motors zugrunde, der möglichst manipulationssicher ist und sich mit geringem schaltungstechnischem Aufwand realisieren läßt.

Dieses Problem wird durch ein Kraftfahrzeug mit den Merkmalen des Patentanspruchs 1 gelöst. Als motorstartblockierende bzw. -freigebende Steuereinheit wird die das Aktivierungssignal für den Anlasser erzeugerde Einheit und zur Übertragung des Startfreigabesignals die Startleitung, d.h. den Anlasserstrompfad, und damit eine bereits vorhandene Leitung benutzt, so daß keine weitere Leitung benötigt wird. Diese Doppelnutzung ist problemlos möglich, da die Startleitung ansonsten nur während des Anlasservorgangs Stroh führt, so daß sie außerhalb davon, d.h. insbesondere vor der Betätigung des Zünd-Start-Schalters, für eine anderweitige Informationsübertragung verwendbar ist. Zudem wird mit dieser Maßnahme erreicht, daß die Übertragung des Startfreigabesignals mit einer startnotwendigen und daher nicht ohne Funktionsausfall trennbaren Verbindung gekoppelt ist. Dabei erfolgt die Betätigung des Zünd-Start-Schalters unabhängig von der Erzeugung des Motorstartfreigabesignals.

In Weiterbildung der Erfindung bilden gemäß Anspruch 2 eine das Startfreigabesignal erkennende Startfreigabeeinheit und ein den Anlasser aktivierendes Steuerteil Bestandteile einer Motorsteuerungselektronik. Eine derartige Diebstahlsicherung ist durch wenige Hardware- und/oder Software-Zusatzmaßnahmen an einer herkömmlichen Motorsteuerungselektronik realisierbar.

Für Fahrzeuge, für die bereits eine die Zugangsberechtigung erkennende Diebstahlsicherungsanlage vorgesehen ist, ist eine Weiterbildung der Erfindung nach Anspruch 3 besonders vorteilhaft, indem die Diebstahlsicherungsanlage das Startfreigabesignal erzeugt und auf die Startleitung gibt, wo es von der Steuereinheit abgenommen werden kann. Dadurch sind keine zusätzlichen Bausteine für die Bereitstellung des Startfreigabesignals erforderlich.

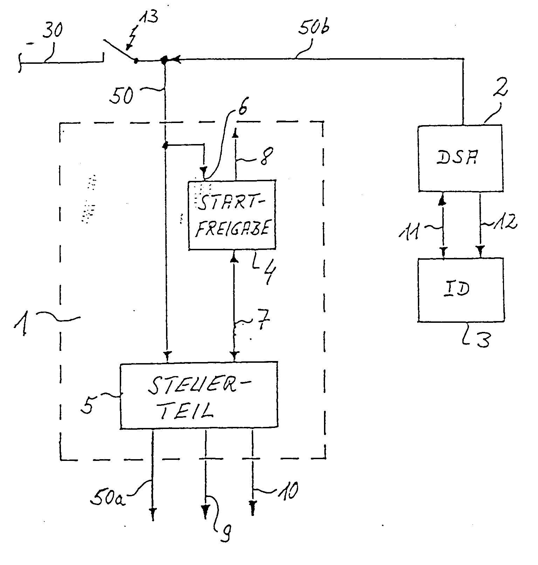

Eine bevorzugte Ausführungsform der Erfindung ist in der Zeichnung dargestellt und wird nachfolgend beschrieben.

Die einzige Figur zeigt ein Blockschaltbild einer Diebstahlsicherung durch Motorstartblockierung für ein Kraftfahrzeug mit Motorsteuerungselektronik und Diebstahlsicherungsanlage.

Das mit der dargestellten Diebstahlsicherung versehene Kraftfahrzeug besitzt eine in der Figur gestrichelt angedeutete Motorsteuerungselektronik (1), von der in der Zeichnung zwei Einheiten explizit angegeben sind, nämlich eine Startfreigabeeinheit (4) und ein Steuerteil (5). Das Steuerteil (5) ist in die Startleitung (50), d.h. die genormte Klemme 50 der Fahrzeugelektrik, eingeschleift, die vom Zünd-Start-Schalter (13) zum (nicht gezeigten) Startermotor führt. Während bei Fahrzeugen ohne Motorsteuerungselektronik durch Schließen des Zünd-Start-Schalters (13) die über eine Leitung (30), d.h. die genormte Klemme 30, anstehende positive Batteriespannung als Startanforderungssignal über die Startleitung (50) direkt zum Startermotor geleitet wird, bewirkt das Einschleifen des Steuerteils (5), daß dieses bei Schließen des Zünd-Start-Schalters (13) mit der positiven Spannung beaufschlagt wird und so die Startanforderung erkennt, um dann, wenn es sich in einem motorstartfreigebenden Betriebszustand befindet, über die Leitungsfortsetzung (50a) der Startleitung (50) zum Startermotor letzteren zu aktivieren und weitere vorgegebene Zusatzfunktionen auszuführen, z.B. Schutz gegen einen Start bei laufendem Motor, Startabbruch und dergleichen. Des weiteren dient das Steuerteil (5) nicht nur der Steuerung des Anlaßvorgangs, sondern es übernimmt die Motorsteuerung während des laufenden Motors, wobei stellvertretend eine Steuerausgangsleitung (9) für die Regelung der Kraftstoffzufuhr und eine Steuerausgangsleitung (10) für die Ansteuerung der Zündung, soweit diese im Fahrzeug vorhanden ist, gezeigt sind.

Die Startfreigabeeinheit (4) ist über eine bidirektionale Signalleitung (7) mit dem Steuerteil (5) verbunden sowie mit einem Startfreigabesignaleingang (6) an die Startleitung (50) angeschlossen. Über eine Informationsausgangsleitung (8) vermag sie eine vom Steuerteil (5) über die Signalleitung (7) gesendete Information über eine erfolgte Motorstartfreigabe zum Fahrzeug weiterzuleiten. Es versteht sich, daß die Motorsteuerungselektronik (1) je nach Bedarf weitere Bausteine und Signalleitungen beinhaltet, die vorliegend nicht von Interesse und daher nicht dargestellt sind. Ebenso versteht es sich, daß die Startfreigabeeinheit (4) und das Steuerteil (5) und/oder weitere Komponenten der Motorsteuerungselektronik in Software oder in Hardware mit einem gewünschten Integrationsgrad als einzelne Bausteine oder als ein gemeinsamer Baustein realisiert sind.

Des weiteren verfügt das Kraftfahrzeug über eine Diebstahlsicherungsanlage (2), die zu Identifikationszwecken von einem codierten Schlüssel (3) über einen bidirektionalen Informationskanal (11) ansprechbar ist, wobei zudem über einen zusätzlichen Senderkanal (12) geeignete Signale von der Diebstahlsicherungsanlage (2) zum codierten Schlüssel (3) gesendet werden können. Diese Signalverbindungen (11, 12) ermöglichen in herkömmlicher Weise eine sehr manipulationssichere Authorisierungscodeerkennung. Wenn der richtige Code in die Diebstahlsicherungsanlage (2) eingegeben wurde, erzeugt diese ein Freigabesignal, das an verschiedene Fahrzeugelemente gesendet wird, z.B. zur Betätigung der Zentralverriegelung.

Neben diesen herkömmlichen Authorisierungsfunktionen, die hier nicht weiter von Interesse und daher nicht explizit in der Figur dargestellt sind, erzeugt vorliegend die Diebstahlsicherungsanlage (2) ein Motorstartfreigabesignal, das zur Startleitung (50) übermittelbar ist, wozu der Startfreigabe-Signalausgang der Diebstahlsicherungsanlage (2) über eine Signalleitung (50b) mit der Startleitung (50) verbunden ist.

Mit diesem schaltungstechnischen Aufbau ergibt sich folgende Funktionsweise der anlasserblockierenden Diebstahlsicherung.

Mit dem Abstellen des Fahrzeugmotors gelangt das Steuerteil (5) durch eine entsprechende Ansteuerung in einen motorstartblockierenden Zustand, in welchem es selbst bei eingangsseitiger Beaufschlagung mit dem Startanforderungssignal über die Startleitung (50) kein Anlasseraktivierungssignal über die entsprechende Leitung (50a) sendet, so daß der Startermotor auch beim Betätigung des Zünd-Start-Schalters (13) inaktiv bleibt. Zur schaltungstechnischen Realisierung dieser Umschaltmöglichkeit zwischen dem motorstartfreigebenden und dem motorstartblockierenden Betriebszustand bietet sich jede dem Fachmann diesbezüglich geläufige Maßnahme an, z.B. Ansteuerung eines Schalters am Ausgang für die Anlasserleitung (50a). Nach Betätigen eines zugangsberechtigenden codierten Schlüssels (3), der mechanisch oder als Fernbedienung realisiert sein kann, erkennt die fahrzeugseitige Diebstahlsicherungsanlage (2) durch den Datenaustausch mit dem Schlüssel (3) über die Signalkanäle (11, 12) diese Zugangsberechtigung und erzeugt daraufhin das Motorstartfreigabesignal in Form eine seriellen Datentelegramms. Über die Einspeiseleitung (50b) gelangt das Startfreigabesignal auf die Startleitung (50), wo es von der Startfreigabeeinheit (4) empfangen und erkannt wird. Zur Unterscheidung vom positiven Batteriespannungssignal bei Schließen des Zünd-Start-Schalters (13) wird diese Erkennung des Startfreigabesignals durch Verwendung eines anderen Ansprechpegels sichergestellt. Alternativ kann vorgesehen sein, die Auskopplung des Startfreigabe-Datentelegramms durch vorheriges Absenden einer Schlüsselbotschaft von der Datensicherungsanlage (2) auf die Startleitung (50) und damit zur Startfreigabeeinheit (4) zu bewerkstelligen. Des weiteren kann bei Bedarf die serielle Übertragung des Datentelegramms zusätzlich durch einen beliebig codegeschützten Datenaustausch zwischen der Datensicherungsanlage (2) und der Motorsteuerungselektronik (1), speziell der Startfreigabeeinheit (4), gegenüber einer Manipulation an der Diebstahlsicherungsanlage (2) oder an deren Startfreigabe-Datentelegramm gesichert werden, wozu dann der Startfreigabe-Signaleingang (6) der Startfreigabeeinheit (4) gleichzeitig auch als Signalausgang für einen derartigen Codedatenaustausch dient.

Auf die Erkennung des Motorstartfreigabesignals hin gibt die Startfreigabeeinheit (4) ein betriebszustandsänderndes Signal an das Steuerteil (5), alternativ auch an weitere vorhandene Komponenten der Motorsteuerungselektronik (1), ab. Das Steuerteil (5) gelangt bei Empfang dieses Startfreigabesignals in einen motorstartfreigebenden Betriebszustand, in welchem es ein Aktivierungssignal auf der zugehörigen Ausgangsleitung (50a) zum Startermotor überträgt, sobald ein Motorstart durch Schließen des Zünd-Start-Schalters (13) angefordert und es dadurch über die Startleitung (50) mit dem Startanforderungssignal beaufschlagt wird. Nach dem Starten des Motors übernimmt das Steuerteil (5) in üblicher Weise die weitere Motorsteuerung, wie Kraftstoffzufuhrregelung, Zündungssteuerung und dergleichen.

Durch die oben beschriebene Anordnung wird folglich mit geringem schaltungstechnischem Aufwand eine sehr manipulationssichere Diebstahlsicherung mittels Blockierung eines unberechtigten Startens des Motors erreicht. Durch die Einspeisung des Startfreigabesignals in den Startleitungspfad (50) ist sichergestellt, daß auch dessen Übertragung von der Diebstahlsicherungsanlage (2) mit einer startnotwendigen Verbindung gekoppelt ist, die nicht ohne Funktionsausfall getrennt werden kann.

Es versteht sich, daß für den Fachmann verschiedenartige Modifikationen der oben beschriebenen Ausführungsform im Rahmen der Erfindung möglich sind, beispielsweise kann bei Fahrzeugen ohne Diebstahlsicherungsanlage eine eigenständige Einrichtung lediglich zur Erzeugung des Signals für die Motorstartfreigabe vorgesehen sein, die so ausgestaltet ist, daß sie nur von einem zugangsberechtigten Benutzer aktivierbar ist. Des weiteren kann die erfindungsgemäße Diebstahlsicherung bei Fahrzeugen ohne Motorsteuerungselektronik schon durch Einfügen der Startfreigabeeinheit sowie eines in die Startleitung eingreifenden Steuerteils in die Fahrzeugelektrik bereitgestellt werden, wobei es für das Steuerteil ausreicht, zwei Betriebszustände einnehmen zu können, den motorstartfreigebenden Betriebszustand, in welchem es ein ankommendes Startanforderungssignal an den Startermotor weitergibt, sowie den motorstartblockierenden Betriebszustand, in welchem es trotz ankommendem Startanforderungssignal kein motorstartendes Anlasseraktivierungssignal abgibt.

## Patentansprüche

1. Kraftfahrzeug mit Diebstahlsicherung durch Motorstartblockierung, mit
- einer benutzercodespezifisch ansprechbaren Einrichtung (2) zur Erzeugung eines Motorstartfreigabesignals und
- einer Steuereinheit (1), die bei Empfang des Startfreigabesignals von einem motorstartblockierenden Betriebszustand in einen motorstartfreigebenden Betriebszustand wechselt und eingangsseitig an eine Startleitung (50) angeschlossen ist, wobei sie bei Empfang eines durch Schließen eines Zünd-Start-Schalters (13) erzeugten Startanforderungssignals nur dann einen Motorstart aktiviert, wenn sie sich im motorstartfreigebenden Betriebszustand befindet, wobei
- das Betätigen des Zünd-Start-Schalters (13) unabhängig vom benutzercodespezifischen Ansprechen der das Motorstartfreigabesignal erzeugenden Einrichtung (2) erfolgt,
**dadurch gekennzeichnet**, **daß**
- der Startfreigabesignalausgang der benutzercodespezifisch ansprechbaren Einrichtung (2) mit der vom Zünd-Start-Schalter (13) abgehenden Startleitung (50) verbunden ist und die Steuereinheit (1) zur unterscheidenden Erkennung des Startfreigabesignals und des Startanforderungssignals eingerichtet ist.

2. Kraftfahrzeug nach Anspruch 1, weiter
**dadurch gekennzeichnet, daß**
die Steuereinheit von einer Motorsteuerungselektronik mit einer Startfreigabeeinheit (4) und einem Steuerteil (5) gebildet ist, die beide eingangsseitig an die Steuerleitung (50) angeschlossen sind, wobei die Startfreigabeeinheit bei Empfang des Startfreigabesignals das Steuerteil vom motorstartblockierenden in den motorstartfreigebenden Betriebszustand setzt und das Steuerteil bei Empfang des Startanforderungssignals ein Motorstartaktivierungssignal nur dann abgibt, wenn es sich im motorstartfreigebenden Betriebszustand befindet.

3. Kraftfahrzeug nach Anspruch 1 oder 2, weiter
**dadurch gekennzeichnet, daß**
die benutzercodespezifisch ansprechbare Einrichtung von einer Diebstahlsicherungsanlage (2) gebildet ist, die mittels eines codierten Schlüssels (3) aktivierbar ist.

## Claims

1. A motor vehicle with theft protection in the form of engine start blocking with
- a user-code-specific triggerable device (2) to generate an engine start release signal and
- a control unit (1) which upon receipt of the engine start release signal switches from engine start blocking mode to engine start releasing mode and is connected to the input side of the starting line (50), which on receipt of a start prompt signal generated by closing an ignition starting switch (13) actuates an engine start only if it is in engine start releasing mode, whereby
- the actuation of the ignition starting switch (13) is independent of the user-code-specific triggering of the device (2) which generates the engine start release signal,
**characterised in that**
- the start release signal output of the user-code-specific triggerable device (2) is connected to the starting line (50) running from the ignition starting switch (13) and the control unit (1) is set up to distinguish between the start release signal and the start prompt signal.

2. A motor vehicle in accordance with Claim 1,
**further characterised in that**
the control unit of an electronic engine control system comprises a start release unit (4) and a control part (5), both of which are connected to the input side of the starting line (50), whereby on receipt of the start release signal the start release unit switches the control part from engine start blocking mode to engine start releasing mode, and on receipt of the start prompt signal the control part emits an engine start actuating signal only if it is in engine start releasing mode.

3. A motor vehicle in accordance with Claim 1 or 2,
**further characterised in that**
the user-code-specific triggerable device is comprised of a theft protection system (2) which can be activated by means of a coded key (3).

## Revendications

1. Véhicule automobile avec sécurité antivol, par inhibition du démarrage du moteur, avec
- un dispositif (2) susceptible de réagir de façon spécifique à un code utilisateur, pour générer un signal de libération de démarrage de moteur, et
- une unité de commande (1), qui, à réception du signal de libération de démarrage, passe d'un état de fonctionnement inhibant le démarrage moteur, en un état de fonctionnement libérant le démarrage moteur, et raccordé côté entrée à une ligne de démarrage (50), cette unité de commande, lors de la réception d'un signal de demande de démarrage généré par fermeture d'un interrupteur allumage-démarrage (13) n'activant alors qu'un démarrage moteur lorsqu'elle se trouve dans un état de fonctionnement libérant le démarrage moteur,
- l'actionnement de l' interrupteur allumage-démarage (13) s'effectue indépendamment de la réaction, spécifique à un code utilisateur, des dispositifs (2) générant le signal de libération de démarrage moteur, caractérisé en ce que
- la sortie de signal de libération de démarrage du dispositif (2) susceptible de réagir de façon spécifique à un code utilisateur est reliée à une ligne de démarrage (50) dérivée de l'interrupteur allumage-démarrage (13) et l'unité de commande (1) étant équipée pour identifier différemment le signal de libération de démarrage et le signal de demande de démarrage.

2. Véhicule automobile selon la revendication 1, caractérisé en ce que l'unité de commande est constituée par une électronique de commande moteur dotée d'une unité de libération de démarrage (4) et d'une partie de commande (5), les deux étant raccordées côté entrée à la ligne de commande (50), l'unité de libération de démarrage faisant passer, à la réception du signal de libération de démarrage, la partie de commande de l'état de fonctionnement inhibant le démarrage moteur à l'état de fonctionnement libérant le démarrage moteur et la partie de commande, à réception du signal de demande de démarrage, ne fournissant un signal d'activation de démarrage moteur que lorsqu'elle se trouve à l'état de fonctionnement à libération de démarrage moteur.

3. Véhicule automobile selon la revendication 1 ou 2, caractérisé en ce que le dispositif susceptible de réagir de façon spécifique à un code-utilisateur est constitué par une installation de sécurité antivol (2) pouvant être activée au moyen d'une clé (3) codée.
